# EUROPÄISCHE PATENTANMELDUNG

(11) **EP 0 623 878 A2**
(43) Veröffentlichungstag der Anmeldung: **09.11.1994**
(21) Anmeldenummer: 94104945.4
(22) Anmeldetag: 29.03.1994
(51) Int. Cl.: G06F 11/32, G05B 19/04

(54) **Anzeigeeinrichtung für ein Installationsbussystem**

(30) Priorität: 03.04.1993 DE 4311094
(71) Anmelder: ABB PATENT GmbH, D-68309 Mannheim (DE)
(72) Erfinder: Kahl, Walter, D-69190 Walldorf (DE); Hummel, Harry, D-69123 Heidelberg (DE); Silber, Birgit, D-64646 Heppenheim (DE)
(74) Vertreter: Rupprecht, Klaus, Dipl.-Ing.

(57) **Zusammenfassung**

Mit der Erfindung wird eine Anzeigeeinrichtung vorgeschlagen, die an ein Installationsbussystem anschließbar ist. Die Anzeigeeinrichtung 6 enthält Mehrfarb-Leuchtdioden (8), die wahlfrei von einem PC aus menuegeführt bestimmten Busteilnehmern (2) zuordenbar sind zur Anzeige von Betriebs- und Störungszuständen mit unterschiedlichen Farben.

## Beschreibung

Die Erfindung bezieht sich auf eine Anzeigeeinrichtung mit Leuchtdioden, die an ein Installationsbussystem als Teilnehmereinrichtung angeschlossen werden kann und zur Anzeige von Betriebszuständen und Störungen anderer Busteilnehmer vorgesehen ist.

Eine solche Anzeigeeinrichtung ist aus der Druckschrift der ABB Stotz-Kontakt GmbH, "SIGMA i-BUS MODULAR Anzeige-Display AD/S 80.64", Druckschrift-Nr. G STO 305691D bekannt.

Die Anzeigeeinrichtung enthält rote Leuchtdioden für die Anzeige von Schalt- und Betriebszuständen. Die Leuchtdioden sind mit Hilfe von DIL-Schaltern bestimmten Gruppen von Teilnehmern zuordenbar. Nachteilig ist die insgesamt geringe Flexibilität der Anzeigeeinrichtung. So ist die Adressierbarkeit auf Teilbereiche der Teilnehmer eingeschränkt und die Adresseneinstellung kann nur an der Einrichtung selbst vorgenommen werden. Störungen können entweder gar nicht oder nur mit Hilfe zusätzlicher Leuchtdioden angezeigt werden. Eine deutliche Unterscheidung nach Betriebs- und Störungszuständen ist nicht gegeben.

Der Erfindung liegt die Aufgabe zugrunde, eine Anzeigeeinrichtung zu schaffen, die beliebig parametrierbar ist und bei gleicher Anzahl von Leuchtdioden eine erweiterte Anzeigemöglichkeit für Zustände ermöglicht.

Diese Aufgabe wird durch eine Anzeigeeinrichtung gelöst, die
a) als Teilnehmer an ein Installationsbussystem anschließbar ist,
b) Leuchtdioden als Anzeigeelemente für Betriebs- und Störungszustände von Busteilnehmern aufweist und
c) Mittel enthält, die eine Zuordnung von Anzeigeelementen zu Busteilnehmern und zu anzuzeigenden Zuständen vornehmen durch Auswertung empfangener Bustelegramme und Vergleich der darin enthaltenen Adressen und Zustandsinformationen mit gespeicherten Zuordnungen,
wobei
d) Leuchtdioden eingesetzt sind, die bei entsprechender Ansteuerung mit einer von mindestens zwei wählbaren Farben leuchten können, und
e) Mittel vorhanden sind, die eine Eingabe der in einer Verarbeitungseinrichtung oder Anzeigeeinrichtung gespeicherten Zuordnungen der Leuchtdioden und Leuchtdiodenfarben zu Busteilnehmern und Zustandarten von der Bedienungseinrichtung eines Rechners aus ermöglichen.

Ausgestaltungen sowie ein Arbeitsverfahren der Anzeigeeinrichtung sind in weiteren Ansprüchen angegeben.

Die Anzeigeeinrichtung ermöglicht durch zwei- oder mehrfarbige Leuchtdioden eine Unterscheidung nach Betriebszuständen und Störungen vorzunehmen. Außerdem ermöglicht die Einrichtung eine Parametrierung von einem Personal Computer (PC) aus, über dessen graphische Oberfläche menuegeführt vorzunehmen. Dies kann durch Anschluß eines PC an eine Schnittstelle an der Anzeigeeinrichtung selbst erfolgen oder über eine Eingabe an einer anderen Stelle des Bussystems mit Übertragung der Daten zur Anzeigeeinrichtung. Jede Leuchtdiode kann jedem Busteilnehmer bzw. anzuzeigenden Betriebszustand zugeordnet werden.

Eine ausführlichere Beschreibung der Erfindung erfolgt nachstehend anhand der Zeichnung. Es zeigen:
- Figur 1: ein Blockschema der Anzeigeeinrichtung,
- Figur 2: ein Flußschema zum Arbeitsverfahren der Einrichtung.

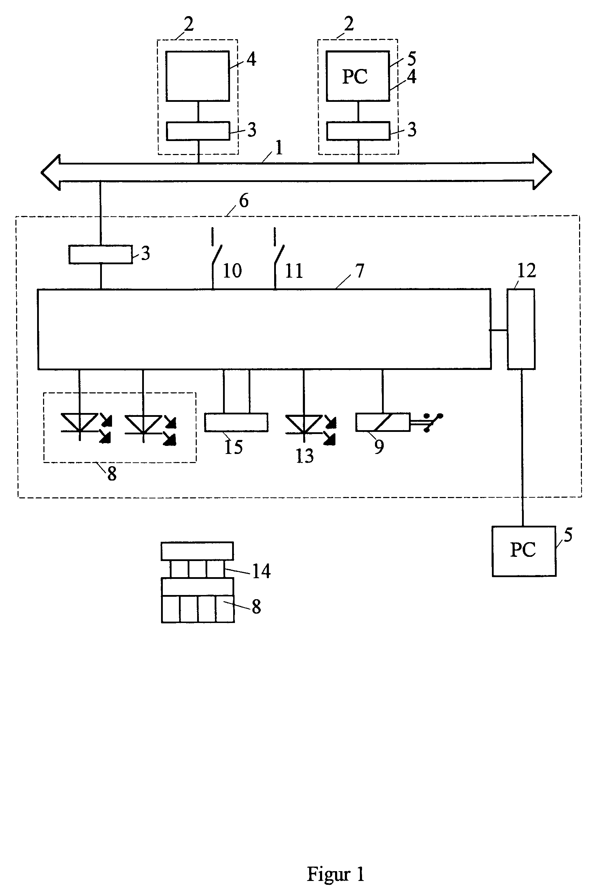

Figur 1 zeigt ein Installationsbussystem, an dem mehrere Teilnehmer 2 angeschlossen sind, die jeweils eine Buskoppeleinrichtung 3 und eine Funktionseinrichtung 4 aufweisen. Als Funktionseinrichtung 4 kann auch ein PC 5 angeschlossen sein. Als weiterer Teilnehmer 2 ist eine Anzeigeeinrichtung 6 angeschlossen. Diese enthält neben der Buskoppeleinrichtung 3 einen Verarbeitungsteil 7 und daran angeschlossene Mehrfarb-Leuchtdioden 8. Außerdem enthält die Anzeigeeinrichtung 6 eine LED-Prüftaste 10 zur Prüfung der Funktionsfähigkeit der Leuchtdioden 8 und eine Quittiertaste 11 sowie eine Sammelstörungsanzeige 13. In einem typischen Ausführungsbeispiel sind 64 Mehrfarben-Leuchtdioden 8 angeordnet.

Die Arbeitsweise der Einrichtung wird nachstehend beschrieben. Die Verarbeitungseinrichtung 7 enthält Steuer- und Speichereinrichtungen, die es ermöglichen, von einem PC aus, d.h. von dessen graphischer Oberfläche aus eine Zuordnung jeder einzelnen Leuchtdiode 8 zu einem Busteilnehmer 2 durch Zuordnung einer Gruppenadresse vorzunehmen. Außer der Zuordnung von Teilnehmern 2 erfolgt auch eine Zuordnung von Betriebszuständen, wie z.B. Ein- oder Ausschaltzuständen und von Störungszuständen durch Festlegung einer bestimmten Farbansteuerung. Die eingesetzten Mehrfarb-Leuchtdioden 8 lassen es durch entsprechende Ansteuerung zu, zumindest zwei Farben, z.B. grün als erste Farbe und die Farbe rot als zweite Farbe zu unterscheiden. In einem solchen Fall kann durch Ansteuerung beider Farben auch die Mischfarbe gelb als Anzeigemöglichkeit genutzt werden.

Als weitere Zuordnung wird festgelegt, welche Störungen zu einer Sammelmeldung führen sollen, die dann mit der Sammelstörungsanzeige 13 an der Anzeigeeinrichtung 6 angezeigt und mit Hilfe von Kontakten des Sammelmelderelais 9 nach außen gemeldet werden, z.B. zur Steuerung eines akustischen Melders. Es kann auch festgelegt werden, ob eine Quittierung von Störungen nur vor Ort mit Hilfe der Quittiertaste 11 der Anzeigeeinrichtung 6 möglich sein soll, oder ob auch eine externe Quittierung über das Bussystem 1 erfolgen darf, wofür dann eine Quittieradresse zuordenbar ist.

Alle Zuordnungen und Festlegungen können am Bildschirm des PC menuegeführt vorgenommen werden, der ein Programm enthält, das die Speicher- und Funktionseinheiten der Anzeigeeinrichtungen simuliert. Das Ergebnis einer auf diese Weise vorgenommenen Parametrierung kann entweder über das Bussystem 1 oder eine Schnittstelle an der Anzeigeeinrichtung 6 in die Speicher der Verarbeitungseinrichtung 7 geladen werden.

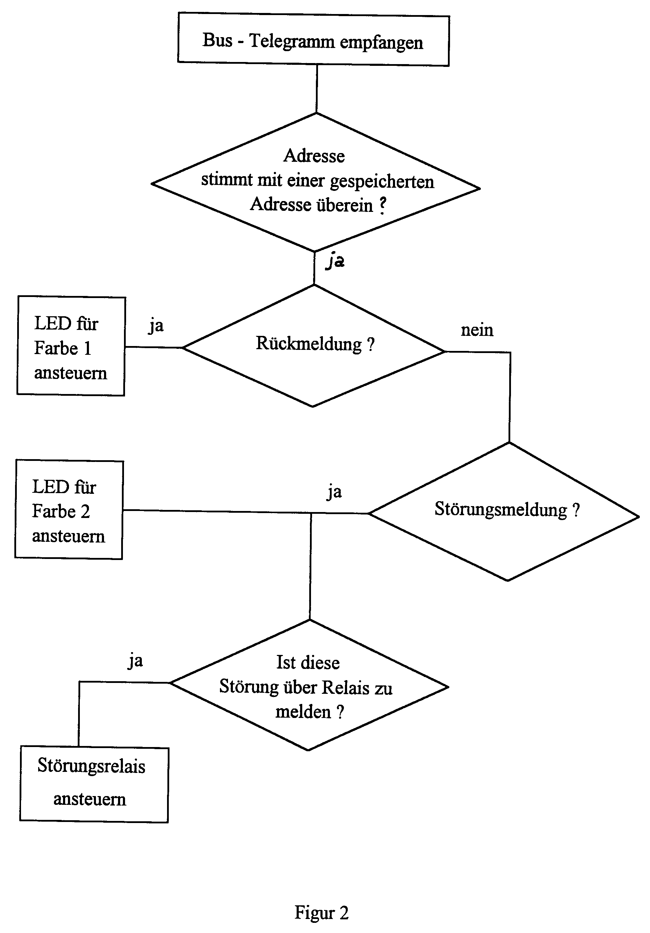

In Figur 2 ist in einem Flußdiagramm dargestellt, wie die Anzeigeeinrichtung auf der Grundlage der gespeicherten Zuordnungen arbeitet.

In der Verarbeitungseinrichtung 7 der Anzeigeeinrichtung 6 wird jedes über die Buskoppeleinrichtung 3 empfangene Telegramm zwischengespeichert und ausgewertet. Dabei wird zunächst durch Adressenvergleich festgestellt, welche Leuchtdiode 8 anzusteuern ist. Anschließend wird geprüft, ob eine Rückmeldung über den Zustand des jeweiligen Busteilnehmers 2 im Telegramm enthalten ist. Wenn dies der Fall ist, wird die Leuchtdiode entsprechend dem gemeldeten Schaltzustand und der festgelegten Anzeigeart angesteuert. Das kann z.B. bedeuten, daß keine Ansteuerung der Leuchtdiode 8 erfolgt, wenn der zugehörige Teilnehmer 2 ausgeschaltet ist, und daß die grüne Farbe angesteuert wird, wenn der Teilnehmer eingeschaltet ist.

Wenn keine Rückmeldung vorliegt, wird geprüft, ob eine Störung gemeldet ist und es wird gegebenenfalls eine Ansteuerung der entsprechenden Leuchtdiode 8 mit der zweiten Farbe, z.B. rot, veranlaßt. Außerdem wird dann noch geprüft, ob aufgrund der gemeldeten Störung das Störungsmelderelais 9 anzusteuern ist.

Nach einer bevorzugten Ausgestaltung ist die Verarbeitungseinrichtung 7 für eine aktive Abfrage des Zustandes anderer Teilnehmer 2 eingerichtet. Eine solche aktive Abfrage ist z.B. zur raschen Erfassung des Istzustandes nach einem Netzausfall zweckmäßig.

Nach einer weiteren Ausgestaltung kann die Anzeigeeinrichtung 6 mit Anschlußstellen 15 für Anzeigeelemente 8 eingerichtet sein, die z.B. über Flachbandkabel 14 mit der Anzeigeeinrichtung 6 verbunden sind.

### Bezugszeichenliste

- 1: Installationsbussystem
- 2: Busteilnehmer
- 3: Buskoppeleinrichtung
- 4: Funktionseinrichtung
- 5: Personal Computer
- 6: Anzeigeeinrichtung
- 7: Verarbeitungseinheit
- 8: Mehrfarb-Leuchtdiode
- 9: Sammelmelderelais
- 10: LED-Prüftaste
- 11: Quittiertaste
- 12: PC-Schnittstelle
- 13: Sammel-Störungsanzeige
- 14: Flachbandkabel
- 15: Anschlußstelle

## Patentansprüche

1. Anzeigeeinrichtung (6), die
a) als Teilnehmer (2) an ein Installationsbussystem (1) anschließbar ist,
b) Leuchtdioden (8) als Anzeigeelemente für Betriebs- und Störungszustände von Busteilnehmern (2) aufweist und
c) Mittel (7) enthält, die eine Zuordnung von Anzeigeelementen (8) zu Busteilnehmern (2) und zu anzuzeigenden Zuständen vornehmen durch Auswertung empfangener Bustelegramme und Vergleich der darin enthaltenen Adressen und Zustandsinformationen mit gespeicherten Zuordnungen,
dadurch gekennzeichnet, daß
d) Leuchtdioden (8) eingesetzt sind, die bei entsprechender Ansteuerung mit einer von mindestens zwei wählbaren Farben leuchten können,
e) Mittel (1,7) vorhanden sind, die eine Eingabe der in einer Verarbeitungseinrichtung (7) oder Anzeigeeinrichtung (6) gespeicherten Zuordnungen der Leuchtdioden (8) und Leuchtdiodenfarben zu Busteilnehmern (2) und Zustandarten von der Bedienungseinrichtung eines Rechners (5) aus ermöglichen.

2. Anzeigeeinrichtung (6) nach Anspruch 1, dadurch gekennzeichnet, daß die Anzeigeeinrichtung eine PC-Schnittstelle (12) aufweist, über die eine Zuordnung (Parametrierung) von einem Personal Computer (5) aus über dessen graphische Oberfläche vorgenommen werden kann.

3. Anzeigeeinrichtung (6) nach Anspruch 1, dadurch gekennzeichnet, daß Mittel (1,5,7) vorhanden sind, die eine Eingabe von Zuordnungen in die Anzeigeeinrichtung (6) von einem Personal Computer (5) aus über die Leitungen des Bussystems (1) ermöglichen.

4. Anzeigeeinrichtung (6) nach einem der vorstehenden Ansprüche, dadurch gekennzeichnet, daß eine Sammel-Meldeeinrichtung (9) vorhanden ist, die im Falle wenigstens einer von mehreren ausgewählten Störungen eine Sammel-Störungsmeldung ausgibt.

5. Anzeigeeinrichtung (6) nach einem der vorstehenden Ansprüche, dadurch gekennzeichnet, daß Mittel (7) vorhanden sind, die es der Anzeigeeinrichtung (6) ermöglichen aktiv über das Bussystem (1) andere Busteilnehmer (2) bezüglich ihres Betriebs- oder Störungzustandes abzufragen.

6. Anzeigeeinrichtung (6) nach einem der vorstehenden Ansprüche, dadurch gekennzeichnet, daß an der Anzeigeeinrichtung (6) eine Prüftaste (10) angeordnet ist, mit der ein Testlauf zur Prüfung der Leuchtdioden (8) auslösbar ist.

7. Verfahren zur Steuerung der Leuchtdioden der Anzeigeeinrichtung gemäß einem der vorstehenden Ansprüche, gekennzeichnet durch nachstehende Schritte:
a) Zwischenspeichern eines empfangenen Bustelegramms,
b) Feststellen, ob die im Telegramm enthaltene Adresse mit einer gespeicherten Adresse übereinstimmt und Vorwahl der Ansteuerung der zugehörigen Leuchtdiode,
c) Feststellen, ob eine Rückmeldung oder Störungsmeldung vorliegt und Ansteuerung der vorgewählten Leuchtdiode mit der für den jeweiligen Fall festgelegten Farbansteuerung.

8. Verfahren nach Anspruch 7, dadurch gekennzeichnet, daß im Fall einer Störungsmeldung durch Vergleich mit gespeicherten Festlegungen geprüft wird, ob die vorliegende Störung eine Sammelmeldung auslösen soll und gegebenenfalls Ansteuern eines Störungsmelderelais.
